# EUROPÄISCHE PATENTSCHRIFT

(11) **EP 1 070 271 B1**
(45) Veröffentlichungstag und Bekanntmachung des Hinweises auf die Patenterteilung: **22.01.2003**
(21) Anmeldenummer: 99924783.6
(22) Anmeldetag: 06.04.1999
(51) Int. Cl.: G02B 6/293

(54) **ANORDNUNG ZUR RÄUMLICHEN TRENNUNG UND/ODER ZUSAMMENFÜHRUNG OPTISCHER WELLENLÄNGENKANÄLE**
ARRANGEMENT FOR SPATIAL SEPARATION AND/OR CONVERGENCE OF OPTICAL WAVELENGTH CHANNELS
CONFIGURATION DESTINEE A LA SEPARATION ET/OU LA REUNION SPATIALE DE CANAUX DE LONGUEURS D'ONDES OPTIQUES

(30) Priorität: 06.04.1998 DE 19815404
(43) Veröffentlichungstag der Anmeldung: 24.01.2001
(73) Patentinhaber: Infineon Technologies AG, 81669 München (DE)
(72) Erfinder: ALBRECHT, Helmut, D-81377 München (DE); HEISE, Gerhard, D-81739 München (DE)
(74) Vertreter: Müller, Wolfram Hubertus, Dr. Dipl.-Phys.
(86) Internationale Anmeldenummer: DE9901042
(87) Internationale Veröffentlichungsnummer: WO99052003

(56) Entgegenhaltungen:
- EP-A- 0 612 165
- EP-A- 0 613 263
- WO-A-96/00915
- OKAYAMA H ET AL: "MULTIPORT WAVELENGTH ROUTERS USING MULTIMODE INTERFERENCE" OPTICAL ENGINEERING, Bd. 36, Nr. 4, 1. April 1997 (1997-04-01), Seiten 1078-1081, XP000700916 ISSN: 0091-3286
- PARKER M C ET AL: "PASSBAND-FLATTENED ARRAYED-WAVEGUIDE GRATING DESIGN USING AN ASPHERIC OUTPUT STAR COUPLER" PROCEEDINGS OF THE SPIE, Bd. 3491, 1998, Seiten 80-84, XP000669795

## Beschreibung

Die Erfindung betrifft eine Anordnung zur räumlichen Trennung und/oder Zusammenführung zumindest zweier optischer Wellenlängenkanäle nach dem Oberbegriff des Anspruchs 1.

Anordnungen der genannten Art sind bekannt. Bei besonderen Ausführungsformen einer solchen Anordnung weist die Gittereinrichtung, die sowohl zur Trennung als auch Zusammenführung der Kanäle verwendet ist, ein optisches Gitter, einen optischen Freistrahlbereich, der zwischen dem allen Kanälen gemeinsam zugeordneten Raumpunkt und dem Gitter angeordnet ist, und einen optischen Freistrahlbereich, der zwischen dem Gitter und jedem einem Kanal allein zugeordneten Raumpunkt angeordnet ist.

Bei einer besonderen derartigen Ausführungsform besteht das Gitter aus einem Phased-Array, d.h. aus mehreren streifenartigen optischen Wellenleitern, deren jeder
- je eine Endfläche, die dem allen Kanälen gemeinsam zugeordneten Raumpunkt zugekehrt ist,
- je eine andere Endfläche, die den Raumpunkten, deren jeder je einem Kanal allein zugeordnet ist, zugekehrt ist, und
- je eine optische Länge zwischen der einen und anderen Endfläche, die von Wellenleiter zu Wellenleiter variiert, aufweist.

Wird die besondere Ausführungsform als Demultiplexer betrieben, bei dem die Kanäle räumlich getrennt werden, bilden die einen Endflächen der Wellenleiter des Phased-Array Eintrittsöffnungen des Gitters und die anderen Endflächen dieser Wellenleiter Austrittsöffnungen des Gitters. Beim Betrieb dieser Ausführungsform als Multiplexer, bei dem die räumlich getrennten Kanäle zusammengeführt werden, bilden die anderen Endflächen der Wellenleiter des Phased-Array Eintrittsöffnungen des Gitters und die einen Endflächen dieser Wellenleiter Austrittsöffnungen des Gitters. Die Wellenleiter des Phased-Array wirken in jedem Fall als optisches Phasengitter.

Anstelle eines Gitters in Form eines Phased Array können auch andere optische Gitter, beispielsweise geätzte Gitter verwendet werden (siehe IEEE, Photonics Technology Lett., Vol. 8, Nr. 10, Okt. 1996, S. 1340 bis 1342).

Die Gittereinrichtung einer derartigen Anordnung bestimmt eine wellenlängenabhängige Transmissionsfunktion jedes streifenartigen optischen Wellenleiters, der einem Kanal allein und/oder allen Kanälen gemeinsam zugeordnet ist und eine Endfläche aufweist, die der Gittereinrichtung zugekehrt und bei dem Raumpunkt angeordnet ist, welcher dem einen Kanal allein bzw. allen Kanälen gemeinsam zugeordnet ist. Diese Transmissionsfunktion ist zumindest in erster Näherung eine Gauß-Funktion (siehe erwähntes Dokument IEEE).

Günstiger wäre ein mehr rechteckförmiger Verlauf der wellenlängenabhängigen Transmissionsfunktion eines solchen Wellenleiters, damit in einem bestimmten Wellenlängenbereich bei Schwankungen der Umgebungstemperatur und/oder Wellenlänge der sich die Einfügedämpfung dieses Wellenleiters nur unwesentlich ändert.

Um die inhärente Gauß-ähnlichen Transmissionsfunktion eines solchen Wellenleiters einzuflachen, d.h. mehr rechteckförmig zu gestalten, sind verschiedene Möglichkeiten beschrieben geworden.

So ist es aus Electr. Lett., 30, 1994, S. 300-301 bekannt, den einem Kanal allein zugeordneten Wellenleiter zur Einflachung dessen Transmissionsfunktion nicht wie üblich als Monomodewellenleiter, sondern als Multimodewellenleiter auszubilden.

Aus ist es bekannt, zwei leicht unterschiedliche Phased Arrays miteinander zu verschachteln, so daß sich bei dem einem Kanal allein zugeordneten Raumpunkt der Anordnung zwei spektral gezielt verschobene Gauß-ähnliche Transmissionsfunktionen zu einer breiteren abgeflachten Transmissionsfunktion überlagern.

Auch ist es bekannt, eine Anordnung so auszubilden, daß bei dem allen Kanälen gemeinsam zugeordneten Raumpunkt der Anordnung zwei sich überlappende Gauß-ähnliche Transmissionsfunktionen vorliegen, die mit einem 3-dB-Strahlteiler (siehe US-A-5 412 744), mit einem sog. "Multimode-Interference"-Koppler (siehe erwähntes Dokument IEEE) und/oder mit einer sog. "Horn"-Struktur (siehe Electr. Lett. 32, 1996, S. 1661-1662) realisiert werden können. Die bei diesem Raumpunkt erzeugte eingeflachte Transmissionsfunktion in Form der beiden sich überlappenden Gauß-ähnliche Transmissionsfunktionen wird von der Gittereinrichtung auf jeden Raumpunkt der Anordnung abgebildet, der einem Kanal allein zugeordnet ist.

Bei den drei zuletzt erwähnten Realisierungen ist der entscheidende Vorgang der Einflachung die Bildung eines Faltungsintegrals aus einer elektrischen Feldverteilung gemäß der sich überlappenden Gauß-ähnlichen Transmissionsfunktionen mit der Gauß-förmigen Mode jedes einem Kanal allein zugeordneten Wellenleiters Anordnung.

Aus Optics Lett. 20, 1995, S. 43-45 ist es bekannt, die elektrische Feldverteilung bei den die Austrittsöffnungen des Gitters bildenden anderen Endflächen der Wellenleiter des Phased Array zu ändern. Grundlage dieser Realisierung ist, daß der zwischen diesen Endflächen und den je einem Kanal allein zugeordneten separaten Raumpunkten angeordnete Freistrahlbereich Linsenwirkung aufweist und damit die elektrische Feldverteilung bei diesen Endflächen und die elektrische Feldverteilung bei diesen separaten Raumpunkten über eine Fourier-Transformation verknüpft sind. Durch eine geeignete Wahl des Querschnitts der Wellenleiter des Phased Arrays und einer zusätzlichen Änderung der optischen Länge dieser Wellenleiter kann bei den anderen Endflächen dieser Wellenleiter eine elektrische Feldverteilung mit entsprechend einer sin(x)/x-Funktion erzeugt werden, die durch die Fourier-Transformation in eine rechteckförmige Feldverteilung bei einem separaten Raumpunkten überführt wird.

Aus Parker M.C. et al, "Passband-flattened arrayed-waveguide grating design using an aspheric output star coupler", Proceedings of the SPIE, Bd. 3491, 1998, Seiten 80-84 ist eine Technik bekannt zur Steuerung des Durchlassbereiches und zur Formung eines "Arrayed Waveguide Grating" (AWG) durch Bildung einer Ausgangssternkupplung derart, dass diese eine parabolische Abweichung von der Standard-Rowland-Kreisgeometrie aufweist.

Aus EP-AI-0612 165 ist ein monolithisch integrierter optischer Filter bekannt, welcher über einen weiten Frequenzbereich abstimmbar ist, und welcher einen Eingangsfrequenz-Router und einen damit über ein Schaltgitter verbundenen Ausgangsfrequenz-Router aufweist.

Der Erfindung liegt die Aufgabe zugrunde, eine baulich einfach zu realisierende Anordnung der eingangs genannten Art bereitzustellen, bei welcher in einem Wellenleiter mit einer bei einem Raumpunkt der Anordung angeordneten Endfläche die wellenlängenabhängige Transmissionsfunktion dieses Wellenleiters nach freier Wahl und ohne spektraler Verbreiterung dieser Punktion auf einfache Weise eingestellt werden kann.

Diese Aufgabe wird durch die im kennzeichnenden Teil des Anspruchs 1 angegebenen Merkmale gelöst.

Gemäß dieser Lösung weist die erfindungsgemäße Anordnung lediglich eine zusätzliche Einrichtung zur Erzeugung einer Schwächungsfunktion zu einer wellenlängenabhängigen Schwächung der Transmissionsfunktion zumindest eines Wellenleiters mit einer bei einem Raumpunkt der Anordnung angeordneten Endfläche auf.

Die von der Einrichtung erzeugte wellenlängenabhängige Schwächungsfunktion wird einer gegebenen Transmissionsfunktion des Wellenleiters überlagert und durch diese Überlagerung in eine geänderte Transmissionsfunktion dieses Wellenleiters überführt.

Die wellenlängenabhängige Schwächungsfunktion kann beliebig gewählt werden, so daß aus einer gegebenen Transmissionsfunktion eines Wellenleiters prinzipiell jede gewünschte Transmissionsfunktion dieses Wellenleiters erzeugt werden kann. Insbesondere kann aus einer gegebenen Transmissionsfunktion des Wellenleiters, die wie beispielsweise eine Gauß-Funktion eine Spitze oder einen Scheitel aufweist, eine abgeflachte Transmissionsfunktion des Wellenleiters erzeugt werden, indem eine Schwächungsfunktion verwendet wird, welche die Funktionswerte der Transmissionsfunktion in der Umgebung der Spitze oder des Scheitels auf etwa konstante Funktionswerte erniedrigt. Eine spektrale Verbreiterung der Transmissionsfunktion des Wellenleiters ist dabei nicht notwendig.

Danach wird der obere Teil einer gegebenen Transmissionsfunktion flach abgeschnitten, wobei gegenüber oben beschriebenen bekannten Anordnungen der wesentliche Vorteil besteht, daß es bei der erfindungsgemäßen Lösung zu keiner Verbreiterung der Transmissionsfunktionen kommt und damit die Nebensprecheigenschaften der Anordnung durch die Abflachung nicht beeinflußt werden.

Desweiteren kann die erfindungsgemäße Abflachung vorteilhafterweise an eine spektrale Breite angepaßt werden.

Die Einrichtung zur Erzeugung der Schwächungsfunktion zur wellenlängenabhängigen Schwächung der Transmissionsfunktion des zumindest einen Wellenleiters weist ein optisches Sperrfilter auf, das auf eine in dem Wellenleiter übertragene optische Leistung wirkt und eine wellenlängenabhängige Filterkurve aufweist, welche die Schwächungsfunktion bildet.

Diese Ausgestaltung hat den Vorteil, daß die Gittereinrichtung unverändert bleiben kann und keine Strahlteiler, Multimode-Interferenz-Koppler, Hornstrukturen oder eine Verdoppelung von Phased-Array-Strukturen erforderlich sind.

Das Sperrfilter kann in dem betreffenden Wellenleiter auf einfache Weise, beispielsweise in Form eines Bragg-Gitters realisiert werden, beispielsweise mit einem Excimer-Laser und Phasenmasken oder holografisch.

Dadurch ist es vorteilhafterweise möglich, für jeden Wellenlängenkanal ein Sperrfilter gemäß Kundenwunsch mit unterschiedlicher Bandbreite und Dämpfung in einem diesem Kanal zugeordneten Wellenleiter zu realisieren, wobei vorteilhafterweise die Abflachung der Transmissionsfunktion jedes dieser Wellenleiter kundenspezifisch eingestellt werden kann.

Unabhängig vom Betrieb der erfindungsgemäßen Anordnung als Demultiplexer oder Multiplexer kann für jeden Wellenlängenkanal das Sperrfilter in dem diesem Kanal allein zugeordneten Wellenleiter und/oder in dem allen Wellenlängenkanälen gemeinsam zugeordneten Wellenleiter ausgebildet sein.

Die Einrichtung zur Erzeugung der Schwächungsfunktion weist eine in der Gittereinrichtung ausgebildete Vorrichtung auf, welche eine in der Gittereinrichtung übertragene optische Leistung jedes Kanals ortsaufgelöst schwächt.

Dabei ist die in der Gittereinrichtung ausgebildete Vorrichtung zur Schwächung einer in der Gittereinrichtung übertragenen optischen Leistung ein quer zu einer Ausbreitungsrichtung der optischen Leistung sich erstreckendes optisches Sperrfilter mit einer ortsaufgelösten Transmissionscharakteristik aufweisen, das auf verschiedene Art und Weise realisiert werden kann.

Weitere bevorzugte und vorteilhafte Ausgestaltungen der erfindungsgemäßen Vorrichtung gehen aus den Ansprüchen 2 und 3 hervor.

Die Erfindung wird in der nachfolgenden Beschreibung anhand der Figuren beispielhaft näher erläutert.

Es zeigen:
- Figur 1: eine Draufsicht auf ein erstes Ausführungsbeispiel einer erfindungsgemäßen Anordnung zur räumlichen Trennung und/oder Zusammenführung Wellenlängenkanälen,
- Figur 2: in vergrößerter Darstellung den Ausschnitt A in Figur 1,
- Figur 3: in vergrößerter Darstellung den Ausschnitt B in Figur 1,
- Figur 4: typische wellenlängenabhängige Transmissionsfunktionen pro Kanal der Anordnung nach Figur 1 ohne Abflachung,
- Figur 5: ein Diagramm mit einer beispielhaften wellenlängenabhängigen Transmissionsfunktion für einen Kanal ohne Abflachung, einer beispielhaften erfindungsgemäßen wellenlängenabhängigen Schwächungsfunktion und einer mit dieser Schwächungsfunktion aus der beispielhaften Transmissionsfunktion erzeugten abgeflachten Transmissionsfunktion,
- Figur 6: eine Modifikation des Beispiels nach Figur 1 in der gleichen Darstellung, wobei die Einrichtung zur Erzeugung der Schwächungsfunktion eine in der Gittereinrichtung ausgebildete Vorrichtung zur generellen Schwächung einer übertragenen optischen Leistung jedes Kanals aufweist, und
- Figur 7: ein Diagramm mit einer beispielhaften Hüllkurve der optischen Feldfunktionen in den Austrittsöffnungen eines Gitters der Gittereinrichtung, einer Schwächungsfunktion zur Schwächung der Feldfunktionen, einer aus dieser Schwächung resultierenden neuen Hüllkurve und einer daraus resultierenden Transmissionsfunktion für einen Kanal.

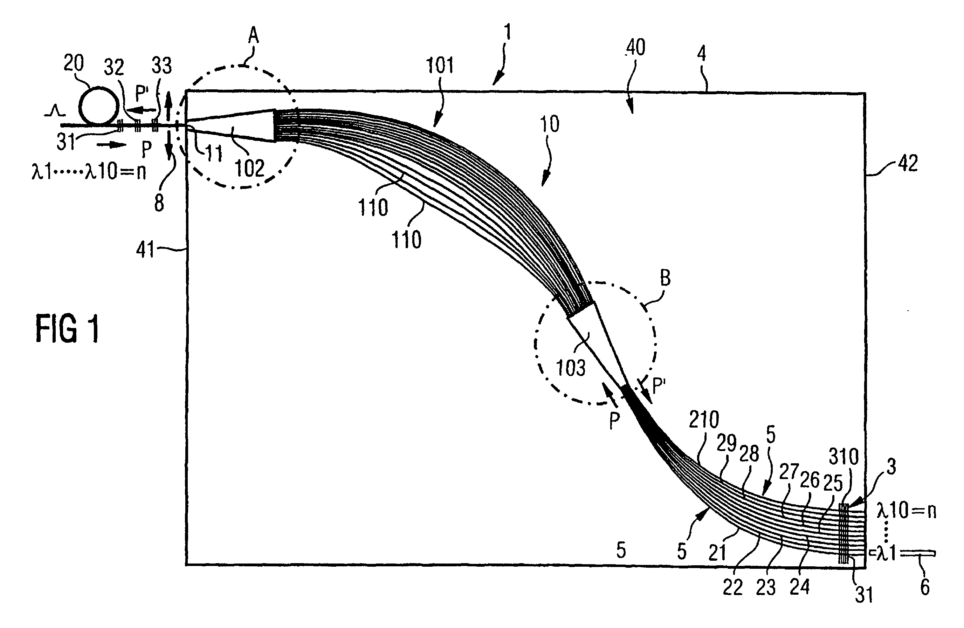

Das in der Figur 1 dargestellte Anordnung 1 basiert speziell und ohne Beschränkung der Allgemeinheit auf der in der WO 96/00915 beschriebenen vorteilhaften Anordnung zur räumlichen Trennung und/oder Zusammenführung zumindest mehrerer optischer Wellenlängenkanäle λ1, λ2, ... λn.

Danach sind bei dem in Figur 1 dargestellten Beispiel ähnlich wie bei der bekannten Anordnung auf der Oberfläche 40 eines Substrats 4 zwischen einer Substratkante 41 und einer dazu im wesentlichen parallelen anderen Substratkante 42
- ein der einen Substratkante 41 zugeordneter optischer Freistrahlbereich 102 in Form eines Schichtwellenleiters und ein von diesem Schichtwellenleiter 102 räumlich getrennter und der anderen Substratkante 42 zugeordneter optischer Freistrahlbereich in Form eines anderen Schichtwellenleiter 103,
- eine optische Phasenschieberanordnung in Form eines Phased-Array 101 aus mehreren gekrümmt verlaufenden streifenartigen optischen Wellenleitern 110 mit von Wellenleiter 110 zu Wellenleiter 110 variierender optischer Länge
   und
- eine Aus- und/oder Einkoppelanordnung 5 aus der Anzahl n der Kanäle λ1, λ2, ... λn gleichen Anzahl streifenartiger optischer Wellenleiter 21, 22, ... 2n, die beispielsweise zu den Wellenleitern 110 des Phased-Array 101 entgegengesetzt gekrümmt verlaufen, angeordnet,
wobei im allgemeinen die Anzahl n der Kanäle kleiner als die Anzahl der Wellenleiter 110 des Phased-Array 101 gewählt ist.

Beispielsweise sind die Anzahl n der Kanäle gleich 10 und die Anzahl der Wellenleiter 110 des Phased-Array 101 gleich 15 gewählt, obgleich die Anzahl der Wellenleiter 110 erheblich größer als 15 sein kann.

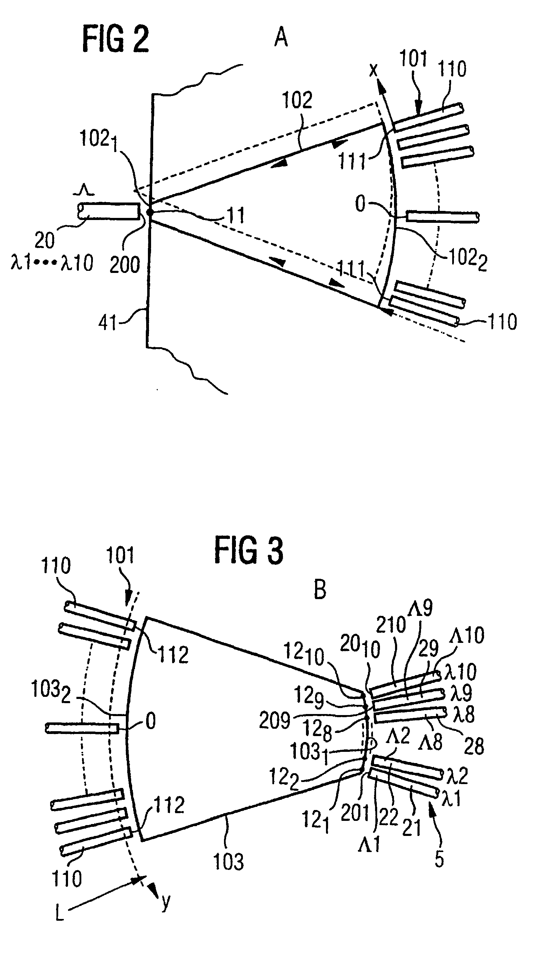

Von den streifenartigen optischen Wellenleitern 110 weist nach den Figuren 2 und 3 jeder je eine Endfläche 111 , die einer dem Phased-Array 101 zugekehrten Endfläche 102₂ des einen Schichtwellenleiters 102 gegenüberliegt, und je eine andere Endfläche 112 auf die einer dem Phased-Array 101 zugekehrten Endfläche 103₂ des anderen Schichtwellenleiters 103 gegenüberliegt.

Die von Wellenleiter 110 zu Wellenleiter 110 variierende optisch Länge L jedes Wellenleiters 110 ist zwischen der einen und anderen Endfläche 111 und 112 dieses Wellenleiters 110 gemessen und jeweils durch das Produkt aus einer effektiven Brechzahl jedes Wellenleiters 110 und dessen längsaxiale geometrische Länge zwischen dessen Endflächen 111 und 112 definiert.

Der eine Schichtwellenleiter 102 weist eine vom Phased-Array 101 abgekehrte Endfläche 102₁ auf, die beispielsweise mit der einen Substratkante 41 abschließt und in der ein Punkt 11 liegt, durch den alle Kanäle λ1 bis λ10 in den einen Schichtwellenleiter 102 einkoppelbar und/oder aus diesem auskoppelbar sind.

Der andere Schichtwellenleiter 103 weist eine vom Phased-Array 101 abgekehrte und der Aus- und/oder Einkoppelanordnung 5 zugekehrte Endfläche 103₁ auf, in der pro Kanal λi (i = 1 bis 10) je ein separater Punkt 12ᵢ liegt, bei dem allein optische Leistung P dieses Kanals λi, die auf den Punkt 11 in der Endfläche 102₁ des einen Schichtwellenleiters 102 konzentriert ist und in diesen Schichtwellenleiter 102 eingekoppelt wird, vom Phased-Array 101 durch den anderen Schichtwellenleiter 103 rekonzentriert wird. Der Punkt 12ᵢ ist dem Kanal λi allein zugeordnet.

Umgekehrt wird optische Leistung P jedes Kanals λi, die bei dem diesem Kanal λi allein zugeordneten Punkt 12ᵢ in der Endfläche 103₁ des anderen Schichtwellenleiters 103 konzentriert ist und in diesen Schichtwellenleiter 103 eingekoppelt wird, vom Phased-Array 101 durch den einen Schichtwellenleiter 103 bei dem Punkt 11 in der Endfläche 102₁ dieses Schichtwellenleiters 102 rekonzentriert. Der Punkt 11 ist demnach allen Kanälen λi gemeinsam zugeordnet.

Die rekonzentrierte optische Leistung eines Kanals λi kann von der eingekoppelten konzentrierten optischen Leistung P abweichen und sei deshalb mit P' bezeichnet.

Das Phased-Array 101 bildet zusammen mit den Schichtwellenleitern 102 und 103 die optische Gittereinrichtung 10 des Beispiels nach Figur 1, wobei der Punkt 11 der allen Kanälen λi gemeinsam zugeordnete Raumpunkt der Gittereinrichtung und jeder separate Punkt 2i ein Raumpunkt der Gittereinrichtung 10 ist, der dem Kanal λi allein zugeordnet ist.

Das Phased-Array 101 bildet ein optisches Gitter der Gittereinrichtung 10 in Form eines Phasengitters, der eine Schichtwellenleiter 102 einen optischen Freistrahlbereich der zwischen dem allen Kanälen λi gemeinsam zugeordneten Raumpunkt 11 und dem Gitter 101 angeordnet ist, und der andere Schichtwellenleiter 103 einen optischen Freistrahlbereich, der zwischen dem Gitter 101 und jedem einem Kanal λi allein zugeordneten Punkt 12ᵢ angeordnet ist.

Die Aus- und/oder Einkoppelanordnung 5 weist pro Kanal λi je einem diesem Kanal λi allein zugeordneten streifenartigen optischen Wellenleiter 2i mit einer Endfläche 20i auf, die bei dem diesem Kanal λi allein zugeordneten Raumpunkt 12ᵢ angeordnet ist und durch welche die bei diesem Punkt 12ᵢ rekonzentrierte optische Leistung P' dieses Kanals λi zumindest teilweise in diesen Wellenleiter 2i einkoppelt wenn die Anordnung als Demultiplexer betrieben ist.

Jeder Wellenleiter 2i der Aus- und/oder Einkoppelanordnung 5 weist eine von der Gittereinrichtung 10 mitbestimmte wellenlängenabhängige Transmissionsfunktion Λi auf.

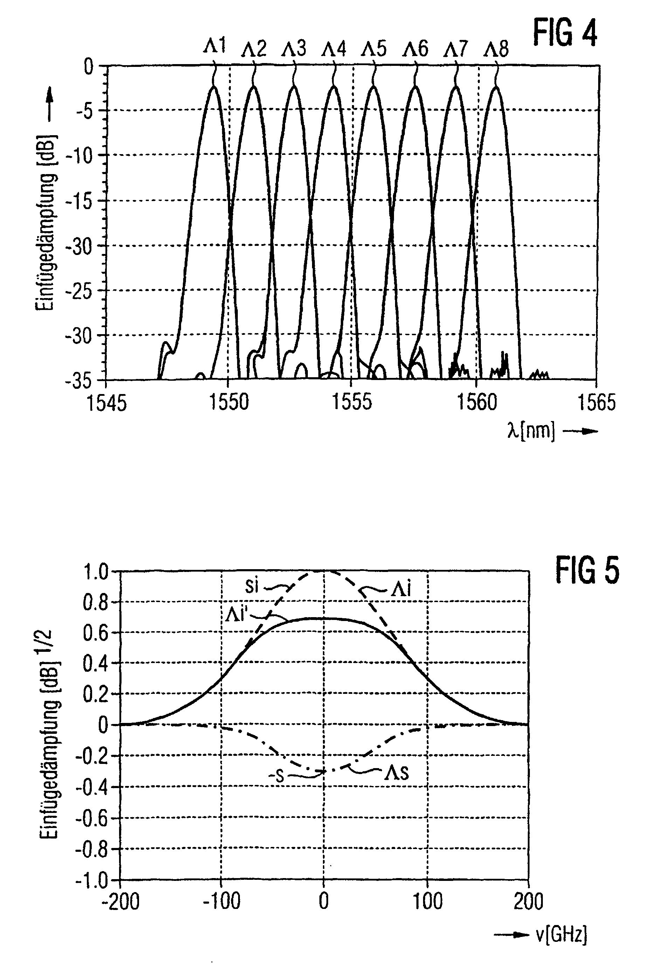

In der Figur 4 sind für den Fall i = 1 bis 8 anstelle von 1 bis 10 typische wellenlängenabhängige Transmissionsfunktionen Λi der Wellenleiter 2i der Aus- und/oder Einkoppelanordnung 5 des Beispiels nach Figur 1 dargestellt. Auf der Abszisse ist die optische Wellenlänge λ, auf der Ordinate die Einfügedämpfung aufgetragen. Jede Transmissionsfunktion Λi gehört allein zum Wellenleiter 2i und Kanal λi. Das Beispiel ist für einen Kanalabstand von 200 GHz ausgelegt.

Jede dieser Transmissionsfunktionen Λi ist einer Gauß-Funktion ähnlich.

Die Anordnung nach Figur 1 weist eine Einrichtung 3 zur Erzeugung einer Schwächungsfunktion Λ_{S} für eine wellenlängenabhängige Schwächung der Transmissionsfunktion Λi zumindest eines Wellenleiters 2i auf.

Die Wirkungsweise der Schwächungsfunktion Λ_{S} sei anhand der Figur 5 erläutert. In diese Figur ist für einen einzelnen Wellenleiter 2i der Aus- und/oder Einkoppelanordnung 5 und damit für den einzelnen Kanal λi schematisch ein Beispiel der wellenlängenabhängigen Transmissionsfunktion Λi dieses Wellenleiters 2i dargestellt.

Diese Transmissionsfunktion Λi ist Gauß-ähnlich und im Unterschied zur Figur 4 in einem Koordinatensystem dargestellt bei dem auf der Abszisse nicht die Wellenlänge, sondern die optische Frequenz ν, und auf der Ordinate die Quadratwurzel der Einfügedämpfung aufgetragen ist. Der Punkt 0 auf der Abszisse entspricht der Zentralwellenlänge λi des gleich bezeichneten Wellenlängenkanals und zeigt die Lage eines Scheitels si der Transmissionsfunktion Λi auf der Abszisse an.

Die Einrichtung 3 erzeugt die Schwächungsfunktion Λ_{S}, die der Transmissionsfunktion Λi überlagert ist. Durch Subtraktion der Schwächungsfunktion Λ_{S} von der Transmissionsfunktion Λi entsteht die neue Transmissionsfunktion Λi' die in der Umgebung von 0 auf der Abszisse gegenüber der ursprünglichen Transmissionsfunktion Λi abgeflacht ist.

Die Abflachung entsteht durch geeignete Wahl des Kurvenverlaufs der Schwächungsfunktion Λ_{S}, insbesondere dadurch daß die Schwächungsfunktion Λ_{S} im Punkt 0 auf der Abszisse einen negativen Scheitel -s aufweist. Besonders geeignet für diesen Fall sind Schwächungsfunktionen Λ_{S} mit Gauß-förmigem, parabolischem oder trigonometrischem Verlauf. Generell kann bei gegebener Transmissionsfunktion Λi oder Λ und gewünschter Transmissionsfunktion Λi' oder Λ' die Schwächungsfunktionen Λ_{S} so bestimmt werden, daß die gewünschte Transmissionsfunktion Λi' oder Λ' von der gegebenen Transmissionsfunktion Λi oder Λ subtrahiert wird.

Beim Beispiel nach Figur 1 ist die Einrichtung 3 zur Erzeugung der Schwächungsfunktion Λ_{S} zur wellenlängenabhängigen Schwächung der Transmissionsfunktion Λi eines Wellenleiters 2i auf einfache Weise durch ein optisches Sperrfilter 3i realisiert, das auf eine in diesem Wellenleiter 2i übertragene optische Leistung P oder P' wirkt und eine wellenlängenabhängige Filterkurve aufweist, welche die Schwächungsfunktion Λ_{S} bildet.

Beispielsweise ist in jedem Wellenleiter 2i (i = 1 bis 10) je ein Sperrfilter 3i ausgebildet, dessen Filterkurve Λ_{S} der Transmissionsfunktion Λi dieses Wellenleiters 3i angepaßt ist. In der Figur 1 sind nur das Sperrfilter 31 im Wellenleiter 21 und das Sperrfilter 310 im Wellenleiter 210 bezeichnet.

Ein Sperrfilter 3i für einen mehrere oder jeden Kanal λi kann auch in einem allen Kanälen λi gemeinsam zugeordneten streifenartigen optischen Wellenleiter 20 mit einer Endfläche 200 ausgebildet sein, die bei dem allen Kanälen λi gemeinsam zugeordneten Raumpunkt 11 angeordnet ist und eine von der Gittereinrichtung 10 mitbestimmte wellenlängenabhängigen Transmissionsfunktion Λ aufweist. Sperrfilter 3i für verschiedene Kanäle λi müssen in diesem Wellenleiter 20 in einer Ausbreitungsrichtung optischer Leistung P oder P' im Wellenleiter 20 hintereinander angeordnet sein. In der Figur 1 sind der Einfachheit halber nur drei solche Sperrfilter gezeigt, die mit 31, 32 und 33 bezeichnet sind.

Ein Sperrfilter 3i für einen Kanal λi kann entweder im zugehörigen Wellenleiter 2i oder im Wellenleiter 20 oder im Wellenleiter 2i und im Wellenleiter 20 ausgebildet sein.

Ein Sperrfilter 3i kann in jeder Art streifenartigen Wellenleiters ausgebildet sein. Streifenartiger Wellenleiter bedeutet hier jeden Wellenleiter, in welchem sich optische Leistung P oder P' im wesentlichen nur in einer Richtung ausbreitet. Darunter fallen sowohl intergrierte Streifenwellenleiter als auch optische Fasern.

Beim Beispiel nach Figur 1 sind die Wellenleiter 2i integrierte Streifenwellenleiter, genaugenommen Monomodewellenleiter, während der Wellenleiter 20 eine Systemfaser ist, die ebenfalls monomodig ist.

Ein Sperrfilter 3i kann auch in einer an einen Wellenleiter 2i angekoppelten Faser 6 ausgebildet sein.

Als Sperrfilter 3i sind Bragg-Gitter gut geeignet, die in einem streifenartigen Wellenleiter durch Maskenbelichtung und/oder holographisch erzeugt werden können.

Sowohl beim Betrieb der Anordnung nach Figur 1 als Demultiplexer als auch als Multiplexer weist jeder Wellenleiter 2i und der Wellenleiter 20 eine abgeflachte Transmissionsfunktion auf.

Beim Betrieb dieser Anordnung als Demultiplexer wird optische Leistung P jedes zu trennenden Kanals λi durch den Wellenleiter 20 dem allen Kanälen gemeinsam zugeordneten Raumpunkt 11 zugeführt und zu dem diesem Kanal λi allein zugeordneten Wellenleiter 2i übertragene optische Leistung P' dieses Kanals λi aus diesem Wellenleiter 2i entnommen. Beim Betrieb als Multiplexer wird optische Leistung P jedes zusammenzuführenden Kanals λi durch den diesem Kanal λi allein zugeordneten Wellenleiter 2i nur dem diesem Kanal λi allein zugeordneten Raumpunkt zugeführt und zu dem allen Kanälen λi zugeordneten Wellenleiter 20 übertragene optische Leistung P' dieses Kanals λi aus diesem Wellenleiter 20 entnommen

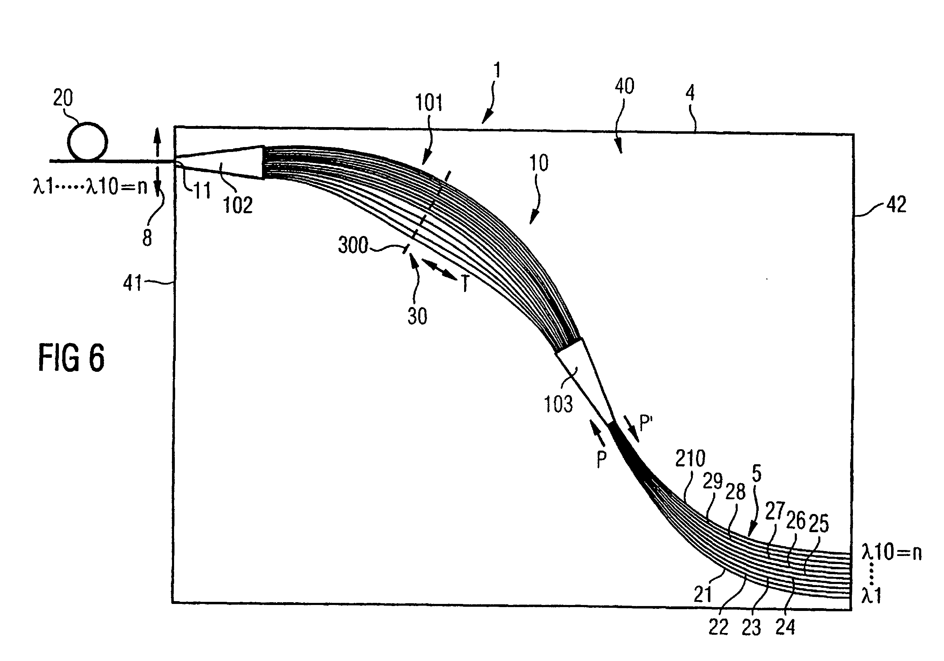

Das in Figur 6 dargestellte Beispiel der erfindungsgemäße Anordnung unterscheidet sich sich vom Beispiel nach Figur 1 nur durch eine andere Realisierung der Einrichtung 3 zur Erzeugung der Schwächungsfunktion Λ_{S}. Diese Einrichtung 3 weist keine in den Wellenleitern 2i und 20 ausgebildete Sperrfilter 3i, sondern eine in der Gittereinrichtung 10 ausgebildete Vorrichtung 30 auf, welche eine in der Gittereinrichtung 10 übertragene optische Leistung P ortsaufgelöst schwächt.

Dieses Beispiel basiert darauf, daß die Freistrahlbereiche 102 und 103 jeweils Linsenwirkung aufweisen und eine Fourier-Transformation vermitteln. Eine auf den Raumpunkt 11 konzentrierte optische Feldverteilung wird nach Einkopplung in den Freistrahlbereich 102 räumlich auf die längs einer Linie x (Figur 2) angeordneten einen Endflächen 111 der Wellenleiter 110 des Phased-Array 101 verteilt, wobei die Feldverteilung entlang der Linie x mit der konzentrierten Feldverteilung im Punkt 11 verknüpft ist.

In jeden Wellenleiter 110 des Phased-Array 101 wird ein Anteil der den einen Endflächen 111 zugeführten optischen Leistung P eingekoppelt und zur anderen Endfläche 112 dieses Wellenleiters 110 übertragen. Dadurch ist an jeder anderen Endfläche 112 je eine auf diese Fläche 112 konzentrierte einzelne optische Feldverteilung vorhandenen. Die anderen Endflächen 112 sind längs einer Linie y (Figur 3) angeordnet. Die einzelnen Feldverteilungen in den anderen Endflächen 112 weisen längs der Linie y eine Einhüllende auf, die gleich der Feldverteilung entlang der Linie x ist. Die anderen Endflächen 112 bilden in diesem Fall die Austrittsöffnungen des Gitters 101, das bewirkt, daß für jeden Kanal λi die aus allen anderen Endflächen 112 austretende optische Leistung P' dieses Kanals λi im Freistrahlbereich 103 übertragen und bei dem Punkt 12i konzentriert wird, der diesem Kanal λi allein zugeordnet ist.

Die bei diesem Punkt 12i konzentrierte optische Feldverteilung und die Einhüllende längs der Linie y sind jeweils durch eine Fourier-Transformierte miteinander verknüpft.

Ähnliches gilt für den umgekehrten Fall, bei dem die Leistung P von einem Punkt 2i ausgeht und über eine Hüllkurve langs der Linie x beim Punkt 11 rekonzentriert wird, d.h. im Multiplexfall.

Durch Schwächung der Hüllkurve längs der Linie y oder x und/oder der Feldverteilung längs der Linie x bzw. y und/oder der in den Wellenleitern 110 des Phased-Array 101 übertragenen optischen Leistung P in der Richtung x oder y kann die wellenlängenabhängige Transmissionscharakteristik Λi und Λ in gewünschter Weise verändert, insbesondere abgeflacht werden.

Eine Möglichkeit zur Realisierung der ortsaufgelösten Schwächung der Hüllkurve ist die Ausbildung der Wellenleiter 110 des Phased-Array 101. Dies betrifft die Gestalt und/oder die Dimension der Wellenleiter 110 und/oder die Ausbildung der Wellenleiter 110 an deren einen Endflächen 111 und/oder der anderen Endflächen 112 und/oder im Verlauf der Wellenleiter 110 zwischen der einen Endfläche 111 und anderen Endfläche 112.

Bei der erfindungsgemäßen Ausgestaltung der Anordnung nach Figur 6 weist die in der Gittereinrichtung (10) ausgebildete Vorrichtung 30 zur Schwächung einer optischen Leistung P ein quer zu einer Ausbreitungsrichtung r der optischen Leistung P sich erstreckendes optisches Sperrfilter 300 mit einer ortsaufgelösten Transmissionscharakteristik auf, die den gewünschten Verlauf der Hüllkurve gewährleistet. Das Sperrfilter 300 kann durch ein Plättchen realisiert sein, das gegenüber den einen Endflächen 111 der Wellenleiter 110 des Phased-Array 101 und/oder gegenüber den anderen Endflächen 112 dieser Wellenleiter 110 und/oder in diesen Wellenleitern 110 angeordnet ist.

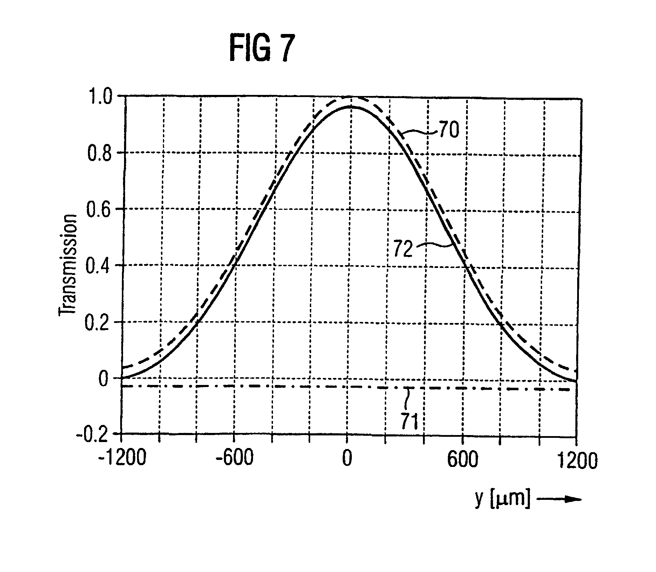

In der Figur 7 ist ein Beispiel einer Hüllkurve längs der Linie y in Figur 3 (oder x in Figur 2) dargestellt und mit 70 bezeichnet. Die Linie y bildet die Abszisse, auf der Ordinate ist die optische Transmission aufgetragen. Die Hüllkurve 70 ist im wesentlichen Gauß-förmig, weist an der einen zentralen Wellenleiter 110 des Phased-Array 101 markierenden und mit 0 bezeichneten Stelle auf der Linie y einen Scheitel und bei den auf beiden Seiten der Stelle 0 am weitesten außen liegenden Wellenleitern 110 des Phased-Array 101 jeweils eine niedrigste aber von null verschiedene Transmission auf.

Die Vorrichtung 30 oder das Sperrfilter 300 weist eine längs der Linie y ortsaufgelöste Transmissionscharakteristik 71 auf, welche die Hüllkurve 70 und damit die übertragene optische Leistung über der Linie y schwächt.

Die Transmissionscharakteristik 71 schwächt die Hüllkurve 70 so, daß die Transmission bei den auf beiden Seiten der Stelle 0 am weitesten außen liegenden Wellenleitern 110 des Phased-Array 101 gleich null und bei der Stelle 0 erniedrigt ist.

Beispielsweise ist die schwächende Transmissionscharakteristik 71 längs der Linie y im wesentlichen konstant. Mit dieser konstanten Charakteristik 71 ergibt sich die geschwächte Hüllkurve 72, die der ursprünglichen Transmissionscharakteristik 70 ähnlich ist, aber überall eine vergleichsweise niedrigere Transmission aufweist.

Die Fourier-Transformierte der geschwächten Hüllkurve 72 ergibt für jeden Kanal λi eine gegenüber der ursprünglichen Transmissionsfunktion Λi des diesem Kanal λi zugeordneten Wellenleiters 2i geschwächte Transmissionsfunktion Λi'.

Zur Erzeugung einer geschwächten Transmissionsfunktion Λi', die gegenüber einer ursprünglichen Gauß-förmigen Transmissionsfunktion Λi abgeflacht ist, ist die ortsaufgelöste schwächende Transmissionscharakteristik 71 so zu gestalten, daß sie gleich der Fourier-Transformierten der diese Abflachung erzeugenden Schwächungsfunktion Λ_{S} ist Generell kann bei gegebener Transmissionsfunktion Λi oder Λ und gewünschter Transmissionsfunktion Λi' oder Λ' so vorgegangen werden, daß die Schwächungsfunktion Λ_{S} durch Subtraktion der gewünschten Transmissionsfunktion Λi' oder Λ' von der gegebenen Transmissionsfunktion Λi oder Λ bestimmt und dann die Fourier-Transformatierte des Subtraktionsergebnisses gebildet wird, oder daß die Fourier-Transformatierte der gewünschten Transmissionsfunktion Λi' oder Λ' von der Fourier-Transformatierten der gegebenen Transmissionsfunktion Λi oder Λ subtrahiert wird.

Die gewünschte Transmissionsfunktion sollte nicht genau rechteckförmig gewählt werden. Günstig ist eine abgeflachte Gauß-ähnliche Transmissionsfunktion Λi' oder Λ', da eine solche der Gauß-ähnlichen Mode eines Wellenleiters 2i oder 20 besser angepaßt ist.

Der Doppelpfeil 8 in den Figuren 1 und 6 deutet eine vorteilhafte aber prinzipiell nicht notwendige Kompensationseinrichtung zur Kompensation einer Temperaturabhängigkeit der Anordnung an, wie sie in der nicht vorveröffentlichten internationalen Anmeldung mit dem internationalen Aktenzeichen PCT/DE 97/02196 vorgeschlagen ist.

## Patentansprüche

1. Anordnung (1) zur räumlichen Trennung und/oder Zusammenführung mindestens zweier optischer Wellenlängenkanäle (λ1; λ2; ... λn) bestehend aus
- einer optischen Gittereinrichtung (10), die derart ausgebildet ist, daß eine optische Leistung (P, P') jedes Kanals (λ1; λ2; ... λn) die einem bestimmten, allen Kanälen (λ1; λ2; ... λn) gemeinsam zugeordneten Raumpunkt (11) zugeordnet ist, mit einer optischen Leistung (P', P) verknüpft wird, die bei einem bestimmten separaten, diesem Kanal (λ1; λ2; ... λn) allein zugeordneten Raumpunkt (12₁, 12₂, ... 12ₙ) konzentriert ist,
- streifenartigen optischen Wellenleiter (21, 22, ...2n), - die je einem dieser Kanäle (λ1; λ2; ... λn) allein zugeordnet sind, und je eine Endfläche (201, 201, ...20n) aufweisen, die bei dem diesem Kanal (λ1; λ2; ... λn) allein zugeordneten Raumpunkt (12₁, 12₂, ...12ₙ) angeordnet ist und durch welche die bei diesem Punkt (12₁, 12₂, ...12ₙ) konzentrierte optische Leistung (P, P') dieses Kanals (λ1; λ2; ... λn) zumindest teilweise in dieser Wellenleiter (21; 22; ...2n) eingekoppelt wird,
wobei die Gittereinrichtung (10) die wellenlängenabhängige Transmissionsfunktion (Λ1; Λ2; ... Λn) der Anordnung mitbestimmt,
- einer Einrichtung (3) zur Erzeugung einer Schwächungsfunktion (Λₛ) für eine wellenlängenabhängige Schwächung der Transmissionsfunktion (Λ1, Λ2, ... Λn, Λ) zumindest eines Wellenleiters (20, 21, 22, ...2n), wobei die Einrichtung (3) zur Erzeugung der Schwächungsfunktion (Λₛ) eine in der Gittereinrichtung (10) ausgebildete Vorrichtung (30) aufweist, welche eine in der Gittereinrichtung(10) übertragene optische Leistung (P) eines Kanals (λ1; λ2; ... λn) ortsaufgelöst schwächt, **dadurch gekennzeichnet, daß** die in der Gittereinrichtung (10) ausgebildete Vorrichtung (30) zur Schwächung einer in der Gittereinrichtung (10) übertragenen optischen Leistung (P) eines Kanals (λ1; λ2; ... λn) ein quer zu der Ausbreitungsrichtung (r) der optischen Leistung (P) sich erstreckendes optisches Sperrfilter (300) mit einer ortsaufgelösten Transmissionscharakteristik (301) aufweist.

2. Anordnung nach Anspruch 1, **dadurch gekennzeichnet, daß** die Gittereinrichtung (10)
- ein optisches Gitter (101),
- einen optischen Freistrahlbereich (102), der
- zwischen dem allen Kanälen (λ1; λ2; ... λn) gemeinsam zugeordneten Punkt (11) und dem Gitter (101) angeordnet ist
- einen optischen Freistrahlbereich (103), der
- zwischen dem Gitter (101) und jedem einem Kanal (λ1; λ2; ... λn) allein zugeordneten Punkt (12₁, 12₂, ...12ₙ) angeordnet ist,
aufweist.

3. Anordnung nach Anspruch 2, **dadurch gekennzeichnet, daß**
das Gitter (11) aus
- mehreren streifenartigen optischen Wellenleitern (110) besteht, deren jeder
- je eine Endfläche (111), die dem allen Kanälen (λ1; λ2; ... λn) gemeinsam zugeordneten Punkt (11) zugekehrt ist,
- je eine andere Endfläche (112), die den Punkten (12₁, 12₂, ...12ₙ) zugekehrt ist, deren jeder je einem Kanal (λ1; λ2; ... λn) allein zugeordnet ist, und
- je eine optische Länge (L) zwischen der einen (111) und der anderen Endfläche (112), die von Wellenleiter (110) zu Wellenleiter (110) variiert,
aufweist.

## Claims

1. Arrangement (1) for physical separation and/or joining of at least two optical wavelength channels (λ1; λ2; ... λn) comprising
- an optical grating device (10) which is designed in such a way that an optical power (P, P') of each channel (λ1; λ2; ... λn), which is supplied to a specific point in space (11) which is assigned jointly to all the channels (λ1; λ2; ... λn), is linked into an optical power (P', P) which is concentrated at a specific separate point in space (12₁, 12₂, ... 12ₙ) which is assigned solely to this channel (λ1; λ2; ... λn),
- strip-like optical waveguides (21, 22, ... 2n) [illegible],
- which are each assigned solely to one of these channels (λ1; λ2; ... λn) and which each have one end surface (201, 202, ... 20n), which is arranged at the point in space (12₁, 12₂, ... 12ₙ) which is assigned solely to this channel (λ1; λ2; ... λn), and by means of which the optical power (P, P') of this channel (λ1; λ2; ... λn) which is concentrated at this point (12₁, 12₂, ... 12ₙ) is at least partially coupled into this waveguide (21; 22; ... 2n), the grating device (10) also governing the wavelength-dependent transmission function (Λ1; Λ2; ... Λn) of the arrangement,
- a device (3) for producing an attenuation function (Λₛ) for wavelength-dependent attenuation of the transmission function (Λ1, Λ2, ... Λn, Λ) of at least one waveguide (20, 21, 22, ... 2n), the device (3) for producing the attenuation function (Λₛ) having an apparatus (30) which is formed in the grating device (10) and which attenuates an optical power (P) of a channel (λ1; λ2; .. λn) transmitted in the grating device (10), on a position-resolved basis, **characterized in that** the apparatus (30) formed in the grating device (10) for attenuation of an optical power (P) of a channel (λ1; λ2; ... λn) which is transmitted in the grating device (10) has an optical stop filter (300) which extends transversely with respect to the propagation direction (r) of the optical power (P) and has a position-resolved transmission characteristic (301).

2. Arrangement according to Claim 1, **characterized in that** the grating device (10) has
- an optical grating (101),
- an optical free-radiating area (102) which
- is arranged between the point (11) which is assigned jointly to all the channels (λ1; λ2; ... λn) and the grating (101),
- an optical free-radiating area (103), which
- is arranged between the grating (101) and each point (12₁, 12₂, ... 12ₙ) which is assigned solely to one channel (λ1, λ2, ... λn).

3. Arrangement according to Claim 2, **characterized in that**
the grating (11) comprises
- a plurality of strip-like optical waveguides (110), each of which
- has in each case one end surface (111) which faces the point (11) which is assigned jointly to all the channels (λ1; λ2; ... λn),
- in each case one other end surface (112) which faces those points (12₁, 12₂, ... 12ₙ) each of which is assigned solely to one channel (λ1; λ2; ... λn) and
- in each case one optical length (L) between the one end surface (111) and the other end surface (112), which varies from waveguide (110) to waveguide (110).

## Revendications

1. Dispositif (1) de réunion et/ou de séparation dans l'espace d'au moins deux canaux (λ1 ; λ2 ; ... λn) optiques de longueurs d'ondes constitué
- d'un dispositif (10) optique à réseau qui est constitué de façon à ce qu'une puissance (P, P') optique de chaque canal (λ1 ; λ2 ; ... λn) qui est associée à un point (11) dans l'espace déterminé et associée en commun à tous les canaux (λ1 ; λ2 ; ... λn) soit combinée à une puissance (P', P) optique qui est concentrée pour un point (12₁, 12₂, ... 12ₙ) dans l'espace défini, distinct et associé seulement à ce canal (λ1 ; λ2 ; ... λn)
- des guides d'ondes (21, 22, ...2n) optiques en forme de ruban,
- qui sont associés respectivement seulement à l'un de ces canaux (λ1 ; λ2 ; ... λn) et qui ont respectivement une surface (201, 201, ... 20n) d'extrémité qui est disposée au point (12₁, 12₂, ... 12ₙ) dans l'espace associé seulement à ce canal (λ1 ; λ2 ; ... λn) et par laquelle la puissance (P, P') optique de ce canal (λ1 ; λ2 ; ... λn) concentrée en ce point (12₁, 12₂, ... 12ₙ) est injectée au moins en partie dans ces guides d'ondes (21 ; 22 ; ... n),
le dispositif (10) à réseau déterminent la fonction (Λ1 ; Λ2 ; ... Λn) de transmission en fonction de la longueur d'onde du dispositif,
- un dispositif (3) de production d'une fonction (Λₛ) d'affaiblissement pour un affaiblissement qui dépend de la longueur d'onde de la fonction (Λ1 ; Λ2 ; ... Λn, Λ) de transmission d'au moins un guide d'ondes (20, 21, 22, ... 2n), le dispositif (3) de production de la fonction (Λₛ) d'affaiblissement ayant un dispositif (30) constitué dans le dispositif (10) de réseau et affaiblissant avec résolution spatiale une puissance (P) optique d'un canal (λ1 ; λ2 ; ... λn) transmise dans le dispositif (10) à réseau, **caractérisé en ce que** le dispositif (30), constitué dans le dispositif (10) à réseau, d'affaiblissement d'une puissance (P) optique d'un canal (λ1 ; λ2 ; ... λn) transmise dans le dispositif (10) à réseau comporte un filtre (300) optique d'arrêt s'étendant transversalement à la direction (r) de propagation de la puissance (P) optique et ayant une caractéristique (301) de transmission à résolution spatiale.

2. Dispositif suivant la revendication 1, **caractérisé en ce que** le dispositif (10) à réseau comprend
- un réseau (101) optique,
- un domaine (102) optique de rayonnement libre, qui
- est interposé entre le réseau (101) et le point (11) associé en commun à tous les canaux (λ1 ; λ2 ; ... λn)
- un domaine (103) optique à rayonnement libre, qui
- est interposé entre le réseau (101) et chaque point (12₁, 12₂, ... 12ₙ) associé seulement à un canal (λ1 ; λ2 ; ... λn).

3. Dispositif suivant la revendication 2, **caractérisé en ce que**
le réseau (11) est constitué
- de plusieurs guides d'ondes (110) optiques de type à ruban, dont chacun
- a respectivement une surface (111) d'extrémité qui est tournée vers le point (11) associé en commun à tous les canaux (λ1 ; λ2 ; ... λn),
- respectivement une autre surface (112) d'extrémité qui est tournée vers le points (12₁, 12₂ ... 12ₙ) dont chacun est associé seulement à l'un des canaux (λ1 ; λ2 ; ... λn) et
- respectivement une longueur (L) optique entre l'une (111) et l'autre surface (112) d'extrémité qui varie d'un guide d'onde (110) à un autre guide d'onde (110).
